# EUROPEAN PATENT SPECIFICATION

(11) **EP 0 462 729 B1**
(45) Date of publication and mention of the grant of the patent: **09.08.1995**
(21) Application number: 91305120.7
(22) Date of filing: 06.06.1991
(51) Int. Cl.: H02P 6/18

(54) **Method and apparatus for detecting the rotor position of a brushless DC motor**
Gerät und Verfahren zum Feststellen der Rotorlage eines bürstenlosen Gleichstrommotors
Méthode et appareil de détection de la position du rotor d'un moteur à courant continu sans balai

(30) Priority: 21.06.1990 US 541583
(43) Date of publication of application: 27.12.1991
(73) Proprietor: SEAGATE TECHNOLOGY INTERNATIONAL, Georgetown Grand Cayman Island (KY)
(72) Inventor: Dunfield, John C., Aptos, California 95003 (US)
(74) Representative: Sturt, Clifford Mark

(56) References cited:
- EP-A- 0 251 785
- EP-A- 0 363 073
- EP-A- 0 420 501
- WO-A-90/12278
- WO-A-90/15473
- EPE'89 vol. 3, 12 October 1989, AACHEN,DE pages 1219 - 1222 L.CARDOLETTI& AL. 'Indirect position detection at standstill forbrushless DC and step motors'

## Description

The present invention relates to method and apparatus for detecting the rotor position of a brushless DC motor when the motor is stopped without the use of known rotor position detecting elements such as Hall effect devices. The method and apparatus may be applied to any type of motor having an excitation flux created by a permanent magnet or by DC current excitation of a winding but is particularly applicable to such a motor as is disclosed in US-A-4,858,044.

In a brushless motor, the position of magnetic poles of a rotor is conventionally detected by means of a detector directly coupled to the shaft of the rotor. In response to the detected positions, semi-conductor switching elements such as transistors, thyristors or the like, are turned on and off so as continuously to generate torque in the motor. Field windings or a multi-segment permanent magnet is used for the rotor.

The torque is created by application of DC current to stator or field windings or phases in sequential order to produce a torque-inducing flux for moving a rotor. The DC current is alternately switched about the field windings to create various current paths that produce magnetic flux orientations in a synchronised fashion. The magnetic flux so produced results in a torque on the rotor that causes the desired rotational movement. In order to ensure that current is applied to the proper motor phase, sensing devices are used to provide information about the position of the rotor.

Typically, this information is derived through devices such as Hall sensors (Hall effect devices), optical sensors or resolvers. These do not give an absolute position, but enough information in order to know the relative position of the rotor in one electrical period. Therefore, it is possible using these devices to energise the motor in such a way that it starts in every case in the correct direction.

Of these, the best known and most commonly used, especially in motors where economy and small size are of significant importance, are Hall sensors. However, the position of the Hall sensors, must be very precisely fixed. Further, the heat resisting temperature of a Hall sensor is limited, so that deterioriation of the characteristics of the motor can occur if the motor is heavily loaded. Another problem with these sensing devices is that they are more prone to failure that most of the apparatus in which they are used. Thus, the Hall sensor significantly affects the overall reliability of the apparatus that incorporates the sensing device. Also, incorporating these sensing devices in the motor structure itself increases the motor size, cost, complexity, power consumption and uses space that could be better utilised to increase the rotor size. Additionally, a number of wire leads must also be provided to each Hall effect device to bring out the information detected by the Hall sensor to a micro-processor or the like external to the motor shell.

Several different solutions to indirect position detection, which do not require the above sensors, have been developed. For example, methods disclosed to date include direct or indirect back EMF detection as disclosed in an article by V. D. Hair, "Direct Detection of Back EMF in Permanent Magnet Step Motors", in Incremental Motion Control Systems and Devices, Symposium, Urbana-Champaign, 1983, pp. 219 to 221 and in US-A-4,138,308, "Stepping Motor Control"; current analysis as disclosed in an article by B.C. Kuo and A. Cas- sat, "On Current Detection in Variable-Reluctance Step Motors", in Incremental Motion Control Systems and Devices, 6th Annual Symposium, Urbana-Champaign, 1977, pp. 205 to 220; and two third-harmonic analyses as disclosed in an article by P. Ferraris, A. Vagati and F. Villata. "PM Brushless Motor: Self Commutating Prerogatives with Magnetically Anisotropic Rotor", in Instituto di Elettriche, Politecnico di Torino, Italia, and in an article by R. Osseni, "Modelisation et Auto-Commutation des Moteurs Synchrones," in EPFL No. 767, 1989.

However, these methods do not provide any information about the position of the rotor at standstill. If the electrical drive system has been switched off and the rotor is not turning, it is not possible to know the actual position as related to the stator phases. Thus, at switch on and motor start-up, the motor may start in either the correct or incorrect direction. This may not matter for many applications, but in other applications, such as in driving the spindle motor in a disk drive, this incorrect starting direction is not acceptable.

One known effort to determine the starting position without the use of sensors is disclosed in EP-A-251,785. According to this method, a short current pulse is applied to each power phase of the motor, and the resulting motor current is measured to determine the positional information of the rotor based on the return pulse of greatest amplitude. However, the difference between the pulses returned from the different phases may be very small. Measurement accuracy may be affected by temperature and differences between the phase inductances or phase resistances. It is possible for all returned pulses to be of equal magnitude rendering position measurement impossible.

In EP-A-420,501, which was published on 3rd April 1991, after the priority date of the present application, is disclosed apparatus for detecting the position of a rotor of a brushless DC motor comprising a driver for applying current pulses to stator windings of the motor, and monitoring means for detecting the current generated in the stator windings in response to said current pulses, characterised in that the driver is arranged to apply both a current pulse of one polarity and a current pulse of an opposite polarity to different ones or sets of the stator windings in succession, and in that there are provided comparison means for determining for each said one or set of the stator windings the sign of the difference between a first value representing the current detected by the monitoring means in response to said current pulse of one polarity and a second value representing the current detected by the monitoring means in response said current pulse of an opposite polarity, and means for identifying the position of the rotor on the basis of outputs from the comparison means.

Also disclosed therein is a method for detecting the position of a rotor of a brushless DC motor, comprising the steps of applying current pulses to stator windings of the motor, detecting the current generated in the stator windings in response to said current pulses, and determining the position of the rotor on the basis of the detected current, and characterised in that the step of applying comprises applying both a current pulse of one polarity and a current pulse of an opposite polarity to different ones or steps of the stator windings in succession, and in that the step of determining comprises determining for each said one or set of the stator windings the sign of the difference between a first value representing the current detected in response to said current pulse of one polarity and a second value representing the current detected in response to said current pulse of an opposite polarity, and identifying the position of the rotor on the basis of the signs determined.

The invention is characterized by the features of Claims 1 and 6. Further embodiments are defined by the dependent Claims.

The present invention will be described further, by way of example with reference to the accompanying drawings, in which:-
Figure 1 is a graph showing phase flux versus current in a phase of a brushless DC motor;
Figure 2 is a graph showing current rise versus time in a brushless DC motor;
Figure 3 is a diagram showing the correlation between excitation flux and the sign of the current rise-time difference in a given motor phase versus motor position;
Figure 4 is a diagram showing the correlation between the excitation flux and the corresponding sign of the motor current rise-time differences for a three-phase motor;
Figure 5 is a block diagram of apparatus according to the present invention.
Figure 6 is a flow chart summarising the rotor position detection before motor start-up in a method according to the present invention;
Figure 7 is a circuit diagram of the phase of a centre tapped star configuration DC motor to which the invention may be applied;
Figure 8 is a schematic view representing phase energisation in an embodiment of the invention;
Figure 9 is a similar schematic view representing phase energisation in another embodiment of the invention;
Figure 10 is a similar schematic view representing phase energisation in a further embodiment of the invention; and
Figure 11 is a circuit diagram illustrating how the invention can be applied to a star configuration DC motor without centre tap.

Any polarised motor, such as a brushless DC motor, including permanent magnets or excitation windings, has a local stator and rotor saturation level. As a result of the saturation level of the iron magnetic circuit, phase inductances are a function of rotor position. The approach taken in the present invention is to measure the saturation level of the phase flux versus the current in a phase for each corresponding phase in such a way that the following parameters cannot influence measurement accuracy: temperature effect on resistance in the phase, the relatively small differences between the inductances created in the magnetic circuits; where a relatively high frequency is used to measure the inductance, secondary effects such as eddy currents.

The method disclosed below and the apparatus used to implement it provide a reliable and efficient approach to determining the starting position for a motor, particularly a low power motor.

In the magnetic circuit of a motor phase winding, with current, two effects are superimposed:
(1) the permanent magnet flux (or the DC current excitation winding flux); and
(2) the current flux. The total flux in a given phase can be expressed as follows: 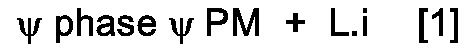 where:
   ϕ phase = total flux in the phase
   ϕ PM = total flux created by the permanent magnet or DC current excitation in the corresponding phase.
   L = inductance of the phase; L is a function of the current i and the motor rotor position a.
   i = current in the phase.

Consequently, the total flux ϕ phase can be increased or decreased by the current effect, thus modifying the saturation level.

lf ϕ phase >ϕ PM, the magnetic circuit is more saturated due to the additional effect of the current i⁺, and the corresponding inductance can be written as: 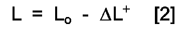 wnere:
Lₒ = inductance of the phase when current equals zero.
Δ L⁺ = incremental change in inductance when current is different from zero (i⁺)
i⁺ = current in the phase, the current creates a positive flux (same flux direction as ψ PM).

On the other hand, if ψ phase < ψ PM, the magnetic circuit is less saturated due to the subtracting effect of the current i⁻, and the inductance can be written as follows: 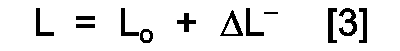 where:
Δ L⁻ = incremental change in inductance when current is different from zero (i⁻)
i⁻ = current in phase, the current creates a negative flux (opposite direction that the ψ PM flux).

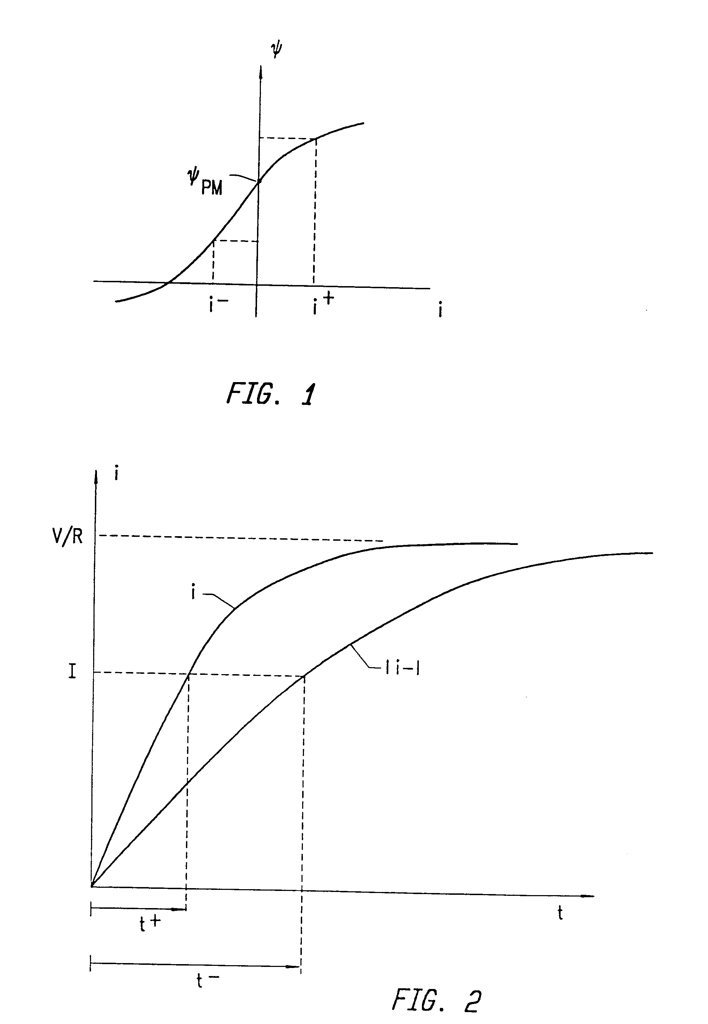

Figure 1 represents the two possible cases for a given position when motor is in a standstill state.

Current i⁺ and current i⁻ are of opposite direction, consequently of opposite sign, and L = L(i).

Instead of directly measuring the inductance, the idea is to analyse the current evolution. At standstill, the phase current can be written as: 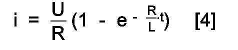 where:
U = applied voltage to the phase
R = total resistance of the phase
t = time
i = current in the phase

Applying equation [4] to the two cases, the current is expressed as follows (see Figure 2):

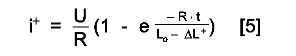

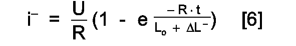

Figure 2 shows the two different currents, where current i⁻ is represented by its absolute value.

Defining a fixed current threshold I, it is possible to compare the time required for each current to reach this pre-determined value. The time required to reach an arbitrarily set current magnitude on each current response curve is equal to: 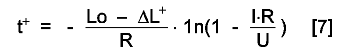 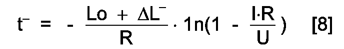 The difference of the two times is equal to:

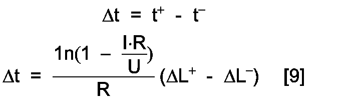

The sign of the time difference At is a characteristic of the current effect superimposed upon the excitation flux ψ PM effect. Three cases have to be considered:

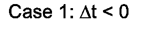

If At is negative, it indicates that the current i⁺ creates a flux of the same direction as the excitation flux created by the permanent-magnet (or the DC current excitation winding flux). The current i⁻ creates a flux of opposite direction to the excitation flux.

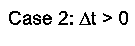

If Δt is greater than zero, it indicates that the current i⁺ creates a flux of opposite direction to the excitation flux. The current i⁻ creates a flux of the same direction as the excitation flux.

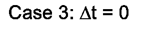

This case corresponds to a situation where ΔL⁺ = ΔL⁻ = 0 corresponding to a very low saturation level in the corresponding phase.

Consequently, it is possible based on the determination of the sign of the time difference t to determine the direction of the excitation flux and consequently the motor position at standstill.

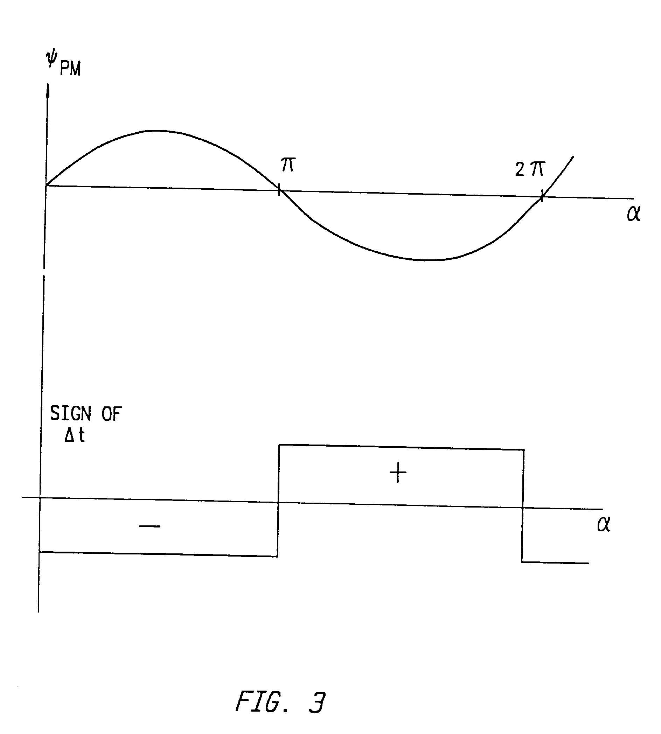

Figure 3 shows the correlation between the excitation flux ϕ PM and the sign of the time difference A t versus the motor position (motor at standstill) with respect to a single phase. Note that the sign of A t for a single phase is determinative of the rotor position to an accuracy of electrical radians.

In a motor having m phases, such a measurement of the sign of the time difference At can be determined in each phase. The corresponding determination of the motor position is therefore given with an accuracy of π/m electrical radians. That is, the accuracy with which motor position is determined is greater where a sequence of the difference phases of the motor are excited at standstill.

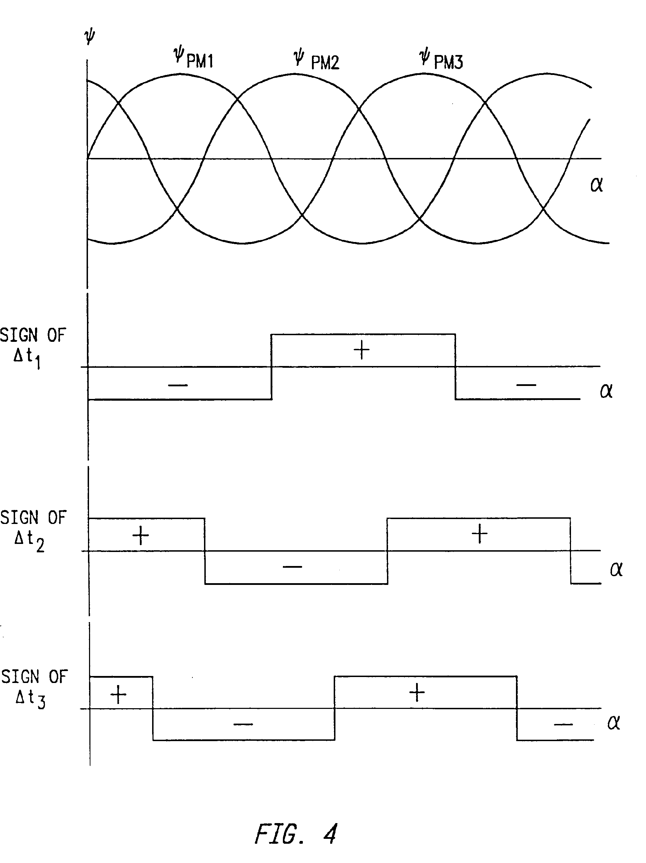

For example, for a three-phase motor, the excitation flux created by the permanent magnet (or the DC current excitation winding) is shifted from one phase to the other by 2π/m electrical radian (m = 3). The measurements of the time difference At in each phase permits determining the motor position with an accuracy of π/3 or 60 electrical degrees. Figure 4 shows such a configuration, and the correlation between the different excitation flux ϕ PM and the corresponding time differences A t, for a three-phase motor. In Figure 4:
a = motor rotor position in electrical degree;
ψ PM1 = excitation flux in phase 1;
ϕ PM2 = excitation flux in phase 2;
ϕ PM3 = excitation flux in phase 3;
A t1 = time difference in phase 1;
A t2 = time difference in phase 2; and
A t3 = time difference in phase 3.

Consequently, there is a unique distribution of the signs of the different time differences representing the motor rotor position over one electrical period of the excitation flux. Therefore, by exciting the phases of the motor and defining a table of the signs of the current differences, the rotor position can be uniquely and accurately established.

Another way to measure indirect saturation detection is current integration. It can be advantageous to measure the sign of the difference in time required for the integral of the excitation current in each phase to attain a set value.

Another possible way to measure the same phenomenom which gives the same result is to determine the sign of the difference in the time required for the differential of the excitation current to reach a set value.

An improvement over the previously described embodiments of invention may be realised by using the magnitude of the time difference to provide a confidence indicator as to the validity of the sign determination. For example, the system may not decide on the correct value of the sign if the magnitude is small and susceptible to noise corruption. Therefore, a higher confidence is realised if the magnitude of the difference is significant. A determination of a low confidence level will inhibit the use of the position information and the position detection process is repeated. If a variable reference source is used, the threshold level I may be raised to create a larger time difference, (see Figure 2) and increase the confidence in the measurement. However, the addition of a magnitude analyser and variable threshold circuitry increases the complexity of the system.

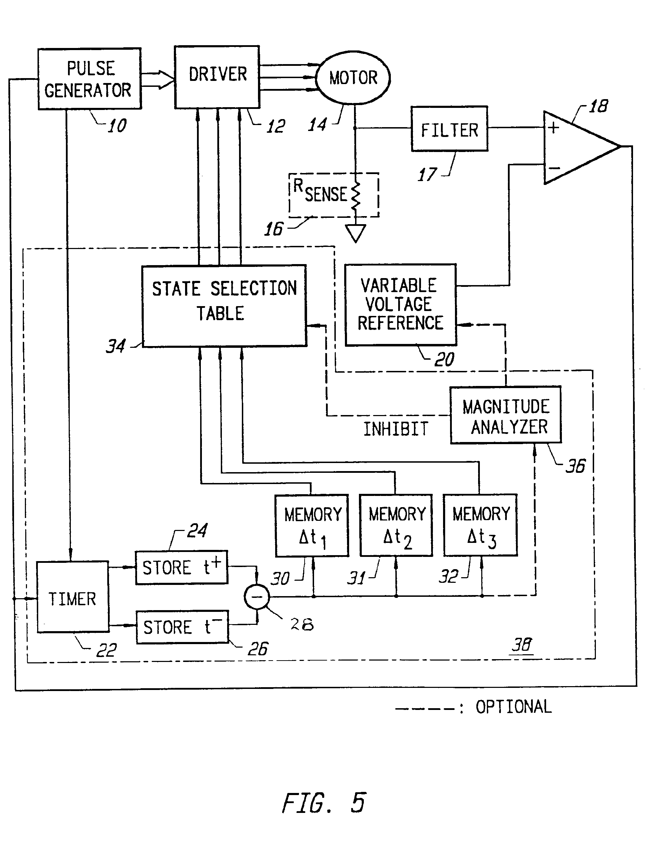

An example of the apparatus used to measure motor position at standstill using the method of the present invention is depicted in Figure 5 for a three-phase motor. The process as described in the following discussion is not intended to be exhaustive, but merely an example. According to this exemplary embodiment, using a pulse generator 10 through a driver 12, each phase of a motor 14 is supplied first with a positive current and then with a negative current. The pulse generator 10 also triggers the timer 22 to begin at the leading edge of the excitation current pulse. Most simply, timer 22 is a digital counter.

The excitation current is converted to a voltage as it passes through the sense resistor 16. The voltage is filtered to remove noise by filter 17. In turn, each phase is first supplied with current until the voltage across the sense resistor 16 becomes larger than a reference voltage supplied by a voltage reference 20 to a comparator 18. At this point, the output of the comparator toggles to a new state and signals both the pulse generator 10 and the timer 22 to stop. The elapsed time from pulse start until the comparator is triggered, is stored in memory location 24. The same phase is then energised using a negative current through driver 12. The resulting current is converted to a voltage at resistor 16 and the voltage triggers the comparator 18 when it exceeds a pre-determined threshold set by the reference voltage from the voltage reference 20. The timer 22 is again triggered to start by a signal from the signal generator 10 which corresponds to the leading edge of the current pulse and is stopped by the output of the comparator 18. The elapsed time is stored in memory location 26.

The voltage reference 20, in its simplest form, is fixed. The same power supply used to power the other components of the system should be used as the reference 20. This will take advantage of the common-mode rejection of the comparator 18 to limit the effects of power supply noise on the position detection system. To enhance the efficiency of the system, reference flexibility using a digital-to-analog converter controlled by a micro-processor is useful in tailoring the reference voltage to a specific application or allowing the reference voltage to be dynamically changed to accommodate motor parameter variations. In addition, the reference threshold can be adjusted to increase the magnitude of the time difference in response to an analysis of the same.

The two time values stored in memory locations 24 and 26 are subtracted in subtractor 28 and the sign of the difference is stored in memory location 30.

The timer 22, subtractor 28, and the memory locations 24, 26, 30, 31 and 32 could either be constructed using hardware components or their functions could be accomplished by an on-board micro-processor as software functions.

The process described above is repeated for each of the windings resulting in two more memory locations 31 and 32 being filled with sign values. The contents of the three memory locations are used to point into a look-up table in a state selection table 34. The look-up table provides the phase excitation order necessary to start the motor in the proper direction. The correct phase excitation order is sent to driver 12 and motor 14 is started in the desired direction.

The table below depicts a typical look-up table for a three-phase star configuration motor. The sign of the time difference is encoded such that a positive value is a digital 1 and negative value is a digital 0. The three bit vector describes a particular rotor position with a 1t/3 or 60 degree accuracy. Using this position vector, the corresponding phase excitation sequence is determined and executed.

The following table provides the first switching sequence.

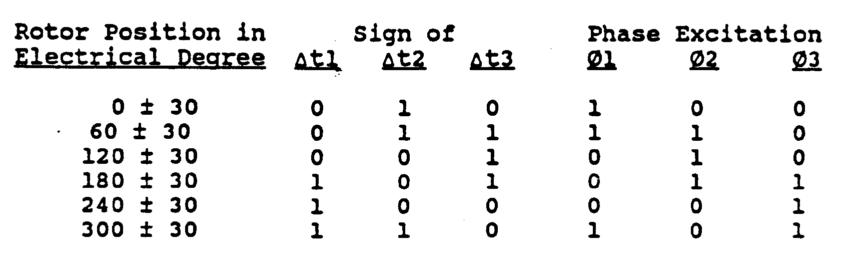

In an optional improvement of the invention, the magnitude of the time difference derived from the subtractor 28 is passed to a magnitude analyser 36, as well as the sign being stored in a memory location 30, 31, or 32. If the magnitude of the time difference, as measured by the magnitude analyser 36, for any one of the phases is less than a pre-determined value indicating that the sign may be erroneous, the analyser 36 signals the state selection table 34 to inhibit its operation and signals the voltage reference 20 (which in this case is variable) to increase the reference voltage. The position determination process is then repeated using the increased reference voltage level. When the analyser 36 is satisfied with the magnitude of the time differences obtained, the state selection table 34 is released to supply the correct phase excitation order to the driver 12. Otherwise, the reference voltage is again increased and the process repeated. After start-up the reference voltage level is returned to its original value.

This combination of circuitry and software ensures that the rotor will start in the correct direction without the use of Hall effect devices or other more intrusive means of detecting rotor position.

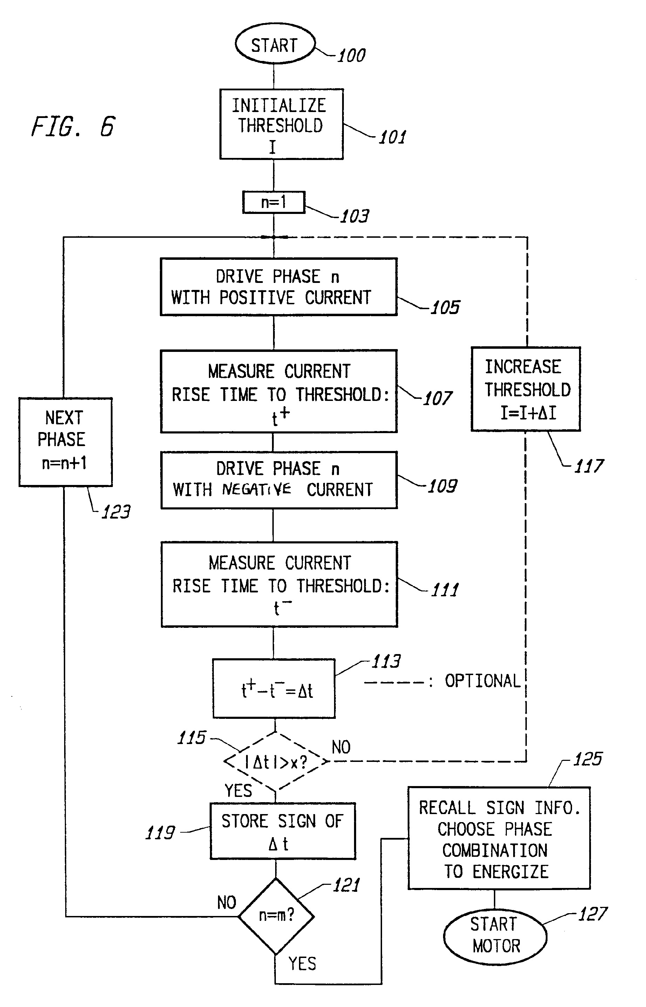

In summary, the present invention can be depicted in a flow chart as shown in Figure 6. The motor 14 is at a standstill at the flow chart start 100. Both the threshold level I and the phase counter are initialised in steps 101 and 103. Phase n, or a combination of n or phases, is driven in step 105 with a short positive current pulse. The time duration for the pulse to rise from 0 to the threshold level I is measured in step 107 as t⁺. The same phase or set of phases is then pulsed with a short negative current in step 109 and the rise time is again measured in step 111 as t7. In step 113, the rise time t7 from the negative pulse is subtracted from the rise time t⁺ of the positive pulse. The result is the time difference between the rise times represented by A t.

The sign of At is stored in memory in step 119. In step 121 it is determined if all the m phases have been tested. If not, the phase number is incremented by 1 in step 123, and the process repeats steps 105, 107, 109, 111, 113, and 119 in pulsing the next phase. If all of the phases have been addressed by the system, (n equals m) then the stored values of the signs of the time differences are accessed and used to determine the position of the rotor in step 125. The look-up table previously described is used to determine in what order the phases must be energised accurately to start the motor in step 127.

However, at the expense of additional complexity, improvement in the performance of the position detection system is achievable. The sign of the difference may not be determinable if the magnitude is small and corrupted by noise. Therefore, in step 115 the magnitude of the At is compared to a confidence factor X. The magnitude of X depends on motor characteristics. If At is less than X, the system is not confident that the sign of At is accurately determinable. Subsequently, step 117 is initiated to add an increment to the threshold level I and then return the process to step 105, repeating the position detection process and achieving a greater time differential between t'and t⁺. However the additional increment will slow the position determination process.

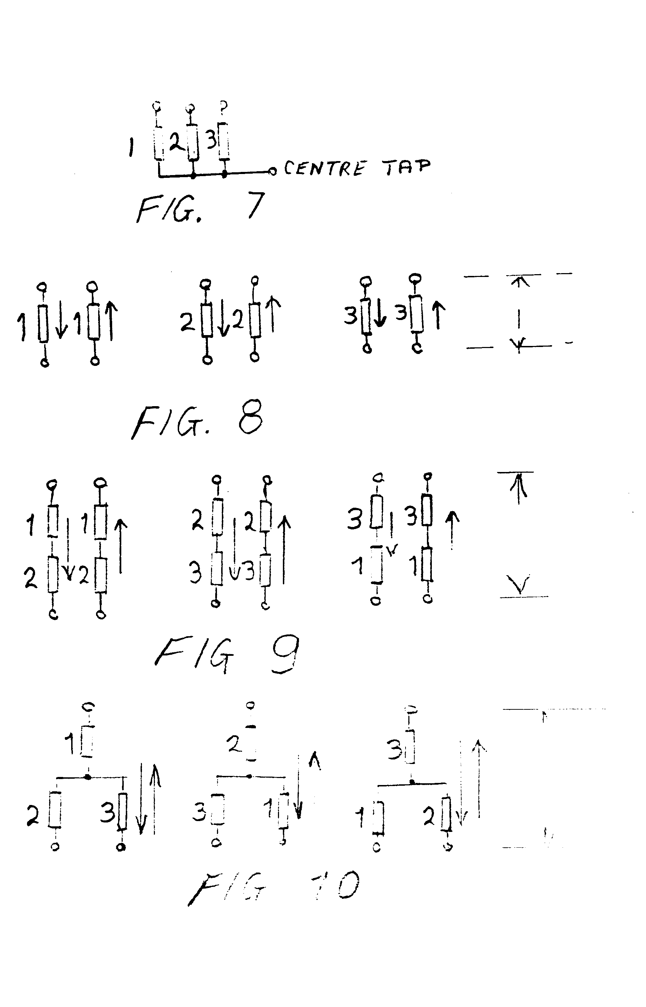

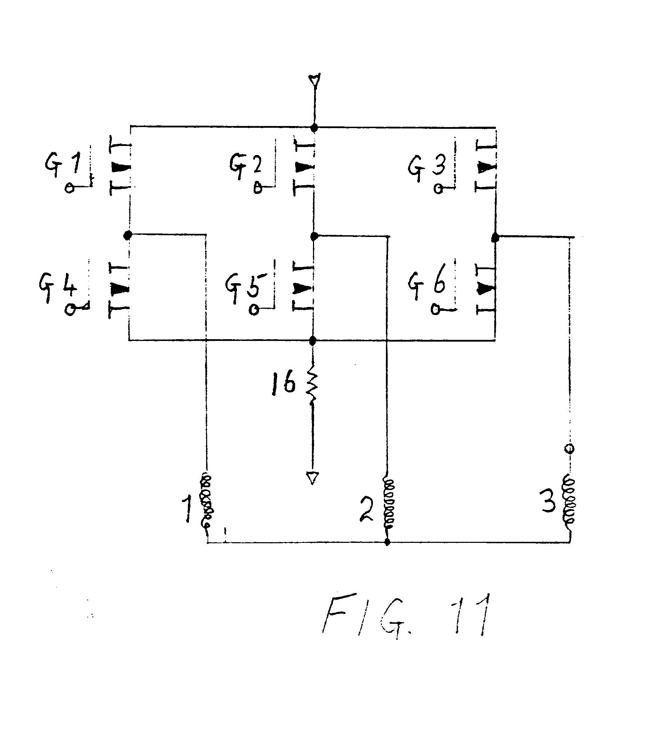

The means and method by which the determination of the rotational position of the rotor of a brushless DC motor at standstill takes place, are dependent upon the number and arrangement of the stator windings. If the phases are in star configuration with a centre tap, as in Figure 7, each end of each phase is accessible and there is a choice of windings or sets of windings to which the opposite polarity pulses may be applied in succession. Thus, as in Figure 8, the opposite polarity pulses are applied to one phase at a time and the rise times of the responses are measured between each phase and the centre tap. Alternatively, as in Figure 9, the opposite polarity pulses are applied to pairs of phases in turn and the rise times of the responses are measured between the pairs of phases. In another arrangement, as in Figure 10, the opposite polarity pulses are applied to combinations of one phase in series with the other two in parallel and the rise times of the responses are measured across the one phase and the two parallel phases. Yet another approach would be to use a combination of the methods illustrated in Figures 8, 9, and 10.

If the phases are in star configuration without centre tap, as in Figure 11, then the method illustrated in Figure 9 is used, because the connected centre ends of the phases are not accessible. The driver includes six transistors G1, G2, G3, G4, G5, and G6, and these are operated in pairs to apply the short duration pulse from the pulse generator to the phases in pairs. First, transistors G1 and G5 are turned on and current flows through phases 1 and 2. Then, transistors G2 and G4 are turned on and current flows through phases 2 and 1, so that a pulse of opposite polarity is applied. Then, transistors G2 and G6 are turned on and current flows through phases 2 and 3. Then, transistors G3 and G5 are turned on and current flows through phases 3 and 2, so that a pulse of opposite polarity is applied. Then, transistors G3 and G4 are turned on and current flows through phases 3 and 1. Then, transistors G1 and G6 are turned on and current flows through phases 1 and 3 so that a pulse of opposite polarity is applied.

Alternatively, the method of Figure 10 may be used. In this case, transistors G1, G5 and G6 are turned on; then transistors G2, G3 and G4 are turned on.

This provides opposite polarity pulses through the combination of phase 1 in series with phases 2 and 3 in parallel.

Transistors G2, G6 and G4 are turned on; then transistors G1, G3 and G5 are turned on. This provides opposite polarity pulses through the combination of phase 2 in series with phases 3 and 1 in parallel.

Transistors G3, G4 and G5 are turned on; then transistors G1, G2 and G6 are turned on. This provides opposite polarity pulses through the combination of phase 3 in series with phases 1 and 2 in parallel.

Each time a current pulse is applied, the response is measured by the voltage across the sense resistor 16 and the pulse terminates when this reaches a reference level. The duration of the pulse is measured by the timer 22 (Figure 5) and the time difference between the durations of the opposite polarity pulses applied to the same pair of phases is measured and its sign stored as described above. When the three signs have been stored, they are compared with the look-up table to determine the phase excitation order to be used at start-up.

While the present invention has been described with reference to specific embodiments the description is illustrative of the invention. Various modifications may occur to those skilled in the art without departing from the scope of the invention as defined by the appended claims.

## Claims

1. Apparatus for determining the rotational positions of a rotor of a brushless DC motor at standstill, comprising driver means (12) for applying electrical pulses to stator windings of the motor (14) characterised by the driver means (12) being arranged to apply short duration electrical pulses of first and second opposite polarities to at least two different stator windings or sets of windings separately and in succession, comparison means (18) to compare the response to each pulse with a reference, detection means (22, 24, 26, 28) to detect rise times of the responses to the reference and to obtain, in relation to each selected winding or set of windings, the sign of the time difference between the rise times of the responses to the pulses applied to that winding or set of windings, and determination means (34) to identify the rotational 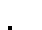
position of the rotor on the basis of the signs of the time differences for the selected stator windings or sets of windings.

2. Apparatus as claimed in claim 1, characterised by means (36) to measure the magnitude of the time difference obtained and to vary said reference dependent upon said magnitude.

3. Apparatus as claimed in claim 1 or 2, wherein the windings are ordered in a plurality of phases, and the driver means is arranged to apply said pulses to each of the phases in succession.

4. Apparatus as claimed in claim 1 or 2, wherein the windings are ordered in a plurality of phases, and the driver means is arranged to apply said pulses to selected pairs of phases in series in succession.

5. Apparatus as claimed in claim 1 or 2, wherein the windings are ordered in a plurality of phases, and the driver means is arranged to apply said pulses to at least two selected combinations of at least one phase in series with at least a pair of phases in parallel in succession.

6. A method for determining the rotational position of a rotor of a brushless DC motor at standstill, including the steps of applying short duration electrical pulses of first and second opposite polarities in succession to at least two different stator windings or sets of windings separately, measuring the rise times of the responses to opposite polarity pulses applied to the same selected windings or sets of windings, obtaining, in relation to each selected winding or set of windings, the sign of the time difference between the rise times of the responses to the pulses applied to that winding or set of windings, and determining the rotational position of the rotor on the basis of the signs of the time differences for the selected stator winding or set of windings.

7. A method as claimed in claim 6, characterised by obtaining the magnitude of the time difference and varying said reference dependent upon said magnitude and repeating the application of pulses to the selected winding or set of windings.

8. A method as claimed in claim 6 or 7, wherein the stator windings are ordered in a plurality of phases, and the opposite polarity pulses are applied to each of the phases in succession.

9. A method as claimed in claim 6 or 7, wherein the stator windings are ordered in a plurality of phases, and the opposite polarity pulses are applied to selected pairs of phases in succession.

10. A method as claimed in claim 6 or 7, wherein the stator windings are ordered in a plurality of phases, and the opposite polarity pulses are applied to at least two selected combinations of at least one phase in series with at least a pair of phases in parallel in succession.

## Patentansprüche

1. Vorrichtung zur Bestimmung der Drehstellungen eines Rotors eines bürstenlosen Gleichstrommotors im Stillstand, mit einer Treibereinrichtung (12) zum Anlegen elektrischer Impulse an Statorwicklungen des Motors (14),
dadurch gekennzeichnet, daß die Treibereinrichtung (12) derart angeordnet ist, daß sie eine kurze Dauer aufweisende elektrische Impulse mit ersten und zweiten entgegengesetzten Polaritäten an zumindestens zwei verschiedene Statorwicklungen oder Sätze von Wicklungen getrennt und aufeinanderfolgend anlegt, und daß Vergleichereinrichtungen (18) zum Vergleich des Ansprechverhaltens auf jeden Impuls mit einem Bezugswert, Detektoreinrichtungen (22, 24, 26, 28) zur Feststellung der Anstiegszeiten des Ansprechverhaltens auf den Bezugswert und zur Gewinnung des Vorzeichens der Zeitdifferenz zwischen den Anstiegszeiten des Ansprechverhaltens auf die Impulse, die der Wicklung oder dem Satz von Wicklungen zugeführt werden, bezüglich jeder ausgewählten Wicklung oder jedes Satzes von Wicklungen, und Bestimmungseinrichtungen 34 vorgesehen sind, um die Drehstellung des Rotors auf der Grundlage der Vorzeichen der Zeitdifferenzen für die ausgewählten Statorwicklungen oder Sätze von Wicklungen zu identifizieren.

2. Vorrichtung nach Anspruch 1, gekennzeichnet durch Einrichtungen (36) zur Messung der Größe der gewonnenen Zeitdifferenz und zur Änderung des Bezugswertes in Abhängigkeit von dieser Größe.

3. Vorrichtung nach Anspruch 1 oder 2, bei der die Wicklungen in einer Vielzahl von Phasen angeordnet sind, und bei der die Treibereinrichtung so ausgebildet ist, daß sie die Impulse an jede der Phasen aufeinanderfolgend anlegt.

4. Vorrichtung nach Anspruch 1 oder 2, bei derdie Wicklungen in einer Vielzahl von Phasen angeordnet sind, und bei der die Treibereinrichtung so angeordnet ist, daß sie die Impulse an ausgewählte Paare von Phasen in Serie aufeinanderfolgend anlegt.

5. Vorrichtung nach Anspruch 1 oder 2, bei derdie Wicklungen in einer Vielzahl von Phasen angeordnet sind, und bei der die Treibereinrichtung so angeordnet ist, daß sie die Impulse an zumindestens zwei ausgewählte Kombinationen von zumindestens einer Phase in Serie mit der Parallelschaltung von zumindestens zwei Phasen aufeinanderfolgend anlegt.

6. Verfahren zur Bestimmung der Drehstellung eines Rotors eines bürstenlosen Gleichstrommotors im Stillstand, wobei das Verfahren die Schritte des Anlegens von eine kurze Dauer aufweisenden elektrischen Impulsen mit ersten und zweiten entgegengesetzten Polaritäten aufeinanderfolgend und getrennt an zumindestens zwei unterschiedliche Statorwicklungen oder Sätze von Wicklungen, die Messung derAnstiegszeiten des Ansprechverhaltens auf entgegengesetzte Polaritäten aufweisende Impulse, die an die gleichen ausgewählten Wicklungen oder Sätze von Wicklungen angelegt werden, die Gewinnung des Vorzeichens der Zeitdifferenz zwischen den Anstiegszeiten des Ansprechverhaltens auf die an diese Wicklung oder diesen Satz von Wicklungen angelegten Impulse hinsichtlich jeder ausgewählten Wicklung oder jedes Satzes von Wicklungen, und der Bestimmung der Drehstellung des Rotors auf der Grundlage der Vorzeichen der Zeitdifferenzen für die ausgewählte Statorwicklung oder den Satz von Wicklungen einschließt.

7. Verfahren nach Anspruch 6, gekenzeichnet durch die Gewinnung der Größe der Zeitdifferenz und die Änderung des Bezugswertes in Abhängigkeit von der Größe und nachfolgendes Wiederholen des Anlegens der Impulse an die ausgewählte Wicklung oder den Satz von Wicklungen.

8. Verfahren nach Anspruch 6 oder 7, bei dem die Statorwicklungen in einer Vielzahl von Phasen angeordnet sind, und bei dem die Impulse mit entgegengesetzter Polarität an jede der Phasen aufeinanderfolgend angelegt werden.

9. Verfahren nach Anspruch 6 oder 7, bei dem die Statorwicklungen in einer Vielzahl von Phasen angeordnet sind, und bei dem die entgegengesetzte Polaritäten aufweisenden Impulse aufeinanderfolgend an ausgewählte Paare von Phasen angelegt werden.

10. Verfahren nach Anspruch 6 oder 7, bei dem die Statorwicklungen in einer Vielzahl von Phasen angeordnet sind, und bei dem die entgegengesetzte Polaritären aufweisenden Impulse aufeinanderfolgend an zumindestens zwei ausgewählte Kombinationen von zumindestens einer Phase in Serie mit einer Parallelschaltung aus zumindestens zwei Phasen angelegt werden.

## Revendications

1. Appareil pour déterminer les positions de rotation d'un rotor d'un moteur à courant continu sans collecteur à l'arrêt, comprenant un moyen d'entraînement (12) pour appliquer des impulsions électriques aux bobinages statoriques du moteur (14) caractérisé par le moyen d'entraînement (12) qui est agencé pour appliquer des impulsions électriques de courte durée de première et deuxième polarités opposées à au moins deux bobinages statoriques ou ensembles de bobinages différents séparément et successivement, un moyen de comparaison (18) pour comparer la réponse à chaque impulsion avec une référence, un moyen de détection (22, 24, 26, 28) pour détecter des temps de montée des réponses à la référence et pour obtenir, par rapport à chaque bobinage ou ensemble de bobinages sélectionnés, le signe de la différence de temps entre les temps de montée des réponses aux impulsions appliquées à ces bobinage ou ensemble de bobinages, et un moyen de détermination (34) pour identifier la position de rotation du rotor sur la base de signes des différences de temps pour les bobinages statoriques ou ensembles de bobinages sélectionnés.

2. Appareil selon la revendication 1, caractérisé par un moyen (36) destiné à mesurer l'amplitude de la différence de temps obtenue et à faire varier ladite référence dépendant de ladite amplitude.

3. Appareil selon la revendication 1 ou la revendication 2, dans lequel les bobinages sont ordonnés dans une pluralité de phases, et le moyen d'entraînement est agencé pour appliquer lesdites impulsions à chacune des phases successivement.

4. Appareil selon la revendication 1 ou la revendication 2, dans lequel les bobinages sont ordonnés dans une pluralité de phases, et le moyen d'entraînement est agencé pour appliquer lesdites impulsions aux paires de phases sélectionnées en série successivement.

5. Appareil selon la revendication 1 ou la revendication 2, dans lequel les bobinages sont ordonnés dans une pluralité de phases, et le moyen d'entraînement est agencé pour appliquer lesdites impulsions à au moins deux combinaisons sélectionnées d'au moins une phase en série, avec au moins deux phases en parallèle successivement.

6. Procédé pour déterminer la position de rotation d'un rotor d'un moteur à courant continu sans collecteur à l'arrêt, comprenant les étapes d'application d'impulsions électriques de courte durée de première et deuxième polarités opposées successivement à au moins deux bobinages statoriques ou ensembles de bobinage différents séparément, de mesure des temps de montée des réponses aux impulsions de polarités opposées appliquées aux mêmes bobinages ou ensembles de bobinages sélectionnés, d'obtention, par rapport à chaque bobinage ou ensemble de bobinage sélectionné, le signe de la différence de temps entre les temps de montée des réponses aux impulsions appliquées à ces bobinage ou ensemble de bobinages, et de détermination de la position de rotation du rotor sur la base des signes des différences de temps pour le bobinage statorique ou l'ensemble de bobinages sélectionnés.

7. Procédé selon la revendication 6, caractérisé par l'obtention de l'amplitude de la différence de temps et par la variation de ladite référence dépendant de ladite amplitude et par la répétition de l'application d'impulsions au bobinage ou à l'ensemble de bobinages sélectionnés.

8. Procédé selon la revendication 6 ou la revendication 7, dans lequel les bobinages statoriques sont ordonnés dans une pluralité de phases, et les impulsions de polarités opposées sont appliquées à chacune des phases successivement.

9. Procédé selon la revendication 6 ou la revendication 7, dans lequel les bobinages statoriques sont ordonnés dans une pluralité de phases, et les impulsions de polarités opposées sont appliquées aux paires de phases sélectionnées successivement.

10. Procédé selon la revendication 6 ou la revendication 7, dans lequel les bobinages statoriques sont ordonnés dans une pluralité de phases, et les impulsions de polarités opposées sont appliquées à au moins deux combinaisons sélectionnées d'au moins une phase en série avec au moins deux phases en parallèle successivement.
